# EUROPÄISCHE PATENTSCHRIFT

(11) **EP 3 969 770 B1**
(45) Veröffentlichungstag und Bekanntmachung des Hinweises auf die Patenterteilung: **10.04.2024**
(21) Anmeldenummer: 20722455.1
(22) Anmeldetag: 20.04.2020
(51) Int. Cl.: F16D 25/10, F16D 13/70, F16D 21/06

(54) **KUPPLUNGSVORRICHTUNG, HYBRIDMODUL SOWIE ANTRIEBSANORDNUNG FÜR EIN KRAFTFAHRZEUG**
CLUTCH DEVICE, HYBRID MODULE AND DRIVE ARRANGEMENT FOR A MOTOR VEHICLE
SYSTÈME D'EMBRAYAGE, MODULE HYBRIDE ET SYSTÈME D'ENTRAÎNEMENT POUR UN VÉHICULE À MOTEUR

(30) Priorität: 14.05.2019 DE 102019112601; 08.07.2019 DE 102019118337
(43) Veröffentlichungstag der Anmeldung: 23.03.2022
(73) Patentinhaber: Schaeffler Technologies AG & Co. KG, 91074 Herzogenaurach (DE)
(72) Erfinder: HOFSTETTER, Dirk, 76448 Durmersheim (DE)
(86) Internationale Anmeldenummer: PCT/DE2020/100318
(87) Internationale Veröffentlichungsnummer: WO 2020/228886

(56) Entgegenhaltungen:
- WO-A1-2018/202236
- DE-A1-102014 209 618
- DE-A1-102018 123 745

## Beschreibung

Die Erfindung betrifft eine Kupplungsvorrichtung, ein Hybridmodul für ein Kraftfahrzeug sowie eine Antriebsanordnung für ein Kraftfahrzeug.

Aus dem Stand der Technik sind diverse Kupplungsvorrichtungen bekannt.

Die DE 10 2018 122 431 A1 lehrt eine Kupplungsvorrichtung in einem Antriebsstrang eines Fahrzeugs, umfassend eine erste und zweite Kupplung und eine erste und zweite Betätigungsvorrichtung. Die erste Betätigungsvorrichtung beaufschlagt die erste Kupplung mit einer ersten Betätigungskraft zwecks deren Betätigung. Die zweite Betätigungsvorrichtung beaufschlagt die zweite Kupplung mit einer zweiten Betätigungskraft zwecks deren Betätigung.

Dabei umfasst die zweite Betätigungsvorrichtung einen in einem zweiten Betätigungsgehäuse verschiebbaren zweiten Betätigungskolben zur Bewirkung der zweiten Betätigungskraft, welche auf ein zweites Betätigungselement und von dort auf die zweite Kupplung wirkt.

Ein erstes Abstützlager stützt die erste Betätigungskraft ab und ein zweites Abstützlager stützt die zweite Betätigungskraft ab, wobei das zweite Abstützlager an dem zweiten Betätigungsgehäuse gelagert ist.

Ähnlich zur DE 10 2018 122 431 A1 beschreibt auch die DE 10 2018 122 433 A1 eine Kupplungsvorrichtung in einem Antriebsstrang eines Fahrzeugs. Die Kupplungsvorrichtung ist eine Doppelkupplungseinrichtung mit einer ersten und einer zweiten Kupplung und einem feststehenden Gehäuse.

Ein erster Kupplungseingang der ersten Kupplung ist mit einer Antriebswelle einer Brennkraftmaschine verbunden.

Eine erste Betätigungsvorrichtung beaufschlagt die erste Kupplung zwecks deren Betätigung mit einer ersten Betätigungskraft. Eine zweite Betätigungsvorrichtung beaufschlagt die zweite Kupplung zwecks deren Betätigung mit einer zweiten Betätigungskraft.

Ein zweites Abstützlager stützt dabei die zweite Betätigungskraft ab und ein erstes Abstützlager stützt die erste Betätigungskraft ab, wobei das erste Abstützlager radial außen an dem Gehäuse und radial innen an der Antriebswelle aufgenommen ist.

Als weiterer Stand der Technik wird auf die DE 10 2014 209 618 A1 und die WO 2018/202 236 A1 verwiesen, in denen Kupplungsvorrichtungen gemäß dem Oberbegriff des Patentanspruchs 1 gezeigt sind.

In Kupplungsvorrichtungen, die dazu eingerichtet sind, dass eine erste und eine zweite Kupplung gleichzeitig betätigt werden, beispielsweise wenn die erste Kupplung als K0-Kupplung und die zweite Kupplung als K1-Kupplung ausgebildet ist, kann es an einem gemeinsamen Abstützlager zu einer erhöhten Belastung kommen. Um diese Belastung aufnehmen zu können, muss das Abstützlager geeignet ausgelegt sein, was jedoch üblicherweise mit erhöhten Herstellungsaufwand bzw. Herstellungskosten und/oder erhöhtem Bauraumbedarf einhergeht.

Bei Kupplungsvorrichtungen, bei denen die Betätigungskräfte von unterschiedlichen Abstützlagern aufgenommen werden, kann es konstruktiv bedingt zu erhöhtem Herstellungsaufwand und/ oder Montageaufwand kommen.

Hiervon ausgehend liegt der vorliegenden Erfindung die Aufgabe zugrunde, eine Kupplungsvorrichtung sowie eine damit ausgestattete Antriebsanordnung und ein Hybridmodul zur Verfügung zu stellen, die mit geringen Kosten eine einfache Montage gewährleisten.

Die Aufgabe wird durch die erfindungsgemäße Kupplungsvorrichtung nach Anspruch 1 gelöst. Vorteilhafte Ausgestaltungen der Kupplungsvorrichtung sind in den Unteransprüchen 2 bis 7 angegeben.

Ergänzend wird ein Hybridmodul, welches die erfindungsgemäße Kupplungsvorrichtung aufweist, gemäß Anspruch 8 zur Verfügung gestellt.

Des Weiteren wird eine Antriebsanordnung für ein Kraftfahrzeug mit dem erfindungsgemäßen Hybridmodul gemäß Anspruch 9 zur Verfügung gestellt.

Die Merkmale der Ansprüche können in jeglicher technisch sinnvollen Art und Weise kombiniert werden, wobei hierzu auch die Erläuterungen aus der nachfolgenden Beschreibung sowie Merkmale aus den Figuren hinzugezogen werden können, die ergänzende Ausgestaltungen der Erfindung umfassen.

Die Begriffe "axial" und "radial" beziehen sich im Rahmen der vorliegenden Erfindung immer auf die Rotationsachse der Kupplungsvorrichtung.

Die Erfindung betrifft eine Kupplungsvorrichtung in einem Antriebsstrang eines Fahrzeugs mit einem Gehäuse, einer ersten Kupplung mit einem mit einer Antriebswelle verbundenen oder von der Antriebswelle ausgebildeten Kupplungseingang, und einer zweiten Kupplung. Der ersten Kupplung ist eine erste Betätigungsvorrichtung zur Beaufschlagung der ersten Kupplung mit einer ersten Betätigungskraft zugeordnet und der zweiten Kupplung ist eine zweite Betätigungsvorrichtung zur Beaufschlagung der zweiten Kupplung mit einer zweiten Betätigungskraft zugeordnet. Erfindungsgemäß ist vorgesehen, dass die Kupplungsvorrichtung zur Abstützung der ersten Betätigungskraft ein erstes Abstützlager umfasst und zur Abstützung der zweiten Betätigungskraft ein zweites Abstützlager umfasst, wobei sich das erste Abstützlager an einem Element des Gehäuses axial abstützt. Das zweite Abstützlager ist in axialer Richtung zwischen einem Lamellenträger der zweiten Kupplung sowie dem Kupplungseingang angeordnet, so dass eine in der zweiten Kupplung auf den Lamellenträger der zweiten Kupplung axial übertragene zweite Betätigungskraft von dem Lamellenträger der zweiten Kupplung über das zweite Abstützlager auf den Kupplungseingang übertragbar ist und dort mittels dem ersten Abstützlager am Element des Gehäuses abstützbar ist.

Das bedeutet, dass das Element des Gehäuses über das erste Abstützlager, den Kupplungseingang und den Lamellenträger der zweiten Kupplung eine Gegenkraft zur zweiten Betätigungskraft auf die zweite Kupplungseinrichtung zwecks Realisierung des notwendigen statischen Gleichgewichts bei der Betätigung der zweiten Kupplung aufbringt.

Dabei ist das erste Abstützlager in axialer Richtung zwischen dem Kupplungseingang sowie dem Element des Gehäuses so angeordnet, dass die auf den Kupplungseingang übertragene zweite Betätigungskraft von dem ersten Abstützlager auf das Element des Gehäuses übertragbar ist.

Eine entsprechende axiale Abstützung des ersten Abstützlagers am Element des Gehäuses ist dabei insbesondere an einem Kupplungsdeckel realisiert, der fest mit einem übrigen Gehäusebestandteil verbunden ist.

Das Element des Gehäuses ist dabei unmittelbar oder mittelbar mit dem Gehäusebestandteil verbunden oder kann als integraler Bestandteil des Gehäusebestandteils ausgeführt sein, in dem eine jeweilige Betätigungsvorrichtung angeordnet ist bzw. dort abgestützt ist.

Das Gehäuse der Kupplungsvorrichtung ist dabei insbesondere ein feststehendes Gehäuse.

Eine jeweilige Kupplung wird von der jeweils ihr zugeordneten Betätigungsvorrichtung mit einer Kraft zwecks Betätigung der jeweiligen Kupplung beaufschlagt. Eine jeweilige Betätigungsvorrichtung ist bevorzugt ein ringförmiges Kolben-Zylinder-System, auch als CSC bezeichnet, welches koaxial zu einer Rotationsachse der Kupplungsvorrichtung angeordnet ist.

Das erste und/oder das zweite Abstützlager können radial innerhalb der ersten und/oder zweiten Kupplung angeordnet sein.

Die Kupplungsvorrichtung kann nass laufend ausgeführt sein. Die Durchströmung mit einem Kühlmedium kann auch als eine Spritzkühlung ausgeführt sein. Das Gehäuse kann einen Innenraum der Kupplungsvorrichtung zumindest teilweise umgeben. Das Kühlmedium kann sich in dem Innenraum befinden.

Gemäß einem weiteren Aspekt der Erfindung ist der Kupplungseingang durch einen Lamellenträger, insbesondere einen Außenlamellenträger, der ersten Kupplung ausgebildet, der axial fest mit der Abtriebswelle mechanisch verbunden ist, wobei das erste Abstützlager axial am Lamellenträger der ersten Kupplung anliegt.

Dabei soll nicht ausgeschlossen sein, dass gegebenenfalls noch zwischen dem Lamellenträger der ersten Kupplung und dem ersten Abstützlager ein Zwischenelement angeordnet ist zur Übertragung der axialen Abstützkraft zwischen den Lamellenträger der ersten Kupplung und dem ersten Abstützlager.

In unterschiedlichen Ausgestaltungsformen ist vorgesehen, dass der Lamellenträger der ersten Kupplung mit der Antriebswelle verstemmt oder verschweißt ist.

Dies bedeutet, dass das erste Abstützlager axial zwischen dem Element des Gehäuses sowie dem Lamellenträger der ersten Kupplung angeordnet ist, sodass die axial von der zweiten Kupplung auf den Lamellenträger der ersten Kupplung aufgebrachte zweite Betätigungskraft über den Lamellenträger der ersten Kupplung und das erste Abstützlager am Gehäuse abstützbar ist.

Insbesondere ist vorgesehen, dass der Lamellenträger der ersten Kupplung gleichzeitig als Rotorträger zur drehbaren Anordnung eines Rotors einer mit der Kupplungsvorrichtung verbundenen elektrischen Maschine ausgestaltet ist. Alternativ kann vorgesehen sein, dass der Kupplungseingang in Form eines Absatzes der Antriebswelle ausgebildet ist.

In einer ergänzenden Ausführungsform ist das zweite Abstützlager ein Axiallager. Insbesondere kann das zweite Abstützlager als eine Anlaufscheibe ausgebildet sein.

Gemäß einer erfindungsgemäßen Ausführungsform dienen zur axialen Abstützung der ersten Betätigungskraft und der zweiten Betätigungskraft lediglich das erste Abstützlager und das zweite Abstützlager.

Das bedeutet, dass im Gegensatz zum Stand der Technik somit lediglich zwei Lager angeordnet werden müssen, um eine Abstützung der beiden Betätigungskräfte zu gewährleisten.

Gemäß einem weiteren Aspekt ist radial zwischen der Antriebswelle und dem Element des Gehäuses ein Radiallager angeordnet.

Dieses Radiallager dient neben dem ersten Abstützlager zur radialen Abstützung der Antriebswelle und somit auch zur radialen Abstützung zumindest der ersten Kupplung am Gehäuse. Vorzugsweise stützt sich dabei das erste Abstützlager mit seinem Außenring axial am Element des Gehäuses ab, wobei es mit seinem Innenring am Lamellenträger der ersten Kupplung anliegt.

Insbesondere kann das erste Abstützlager dabei in axialer Richtung am Lamellenträger der ersten Kupplung anliegen, wobei es weiterhin zumindest in radialer Richtung an der Antriebswelle anliegen kann.

Dabei kann das erste Abstützlager ein Schrägkugellager sein und das Radiallager kann am Element des Gehäuses durch ein Federelement axial abgestützt sein, sodass sich durch das erste Abstützlager sowie das Radiallager hinsichtlich der Wirklinien der durch das erste Abstützlager und das Radiallager realisierten Abstützungswirkungen eine O- oder X-Anordnung ergibt.

Das Federelement ermöglicht eine einfache Montage der einzelnen Komponenten der vorliegenden Kupplungsvorrichtung in axialer Richtung bei gleichzeitiger Gewährleistung der axialen Anlage des Radiallagers am Element des Gehäuses und somit der dauerhaften, spielfreien Axialbelastung, sodass sich eine schräge Wirklinie des Radiallagers ergibt, welche zusammen mit der schrägen Wirklinie des als Schrägkugellager ausgeführten ersten Abstützlagers eine O- oder X-Anordnung ergibt. Eine derartige Anordnung gewährleistet, dass keine unerwünschte Verkippung des Kupplungseingangs und damit auch der Kupplungen stattfindet. Des Weiteren ist in einer Ausgestaltung der Kupplungseinrichtung vorgesehen, dass der Lamellenträger der zweiten Kupplung ein Außenlamellenträger der zweiten Kupplung ist und die zweite Kupplung des Weiteren einen Innenlamellenträger aufweist, wobei axial zwischen dem Außenlamellenträger der zweiten Kupplung und dem Innenlamellenträger der zweiten Kupplung ein Axiallager angeordnet ist. Dieses Axiallager ist vorzugsweise eine Anlaufscheibe und dient lediglich im Wesentlichen der Positionierung der beiden Lamellenträger der zweiten Kupplung in axialer Richtung zueinander.

In konstruktiv vorteilhafter Weise liegt das erste Abstützlager mit seiner radialen Außenseite am Element des Gehäuses an, und mit seiner radialen Innenseite am Lamellenträger der ersten Kupplung an.

Des Weiteren ist in einer Ausgestaltung der Kupplungseinrichtung vorgesehen, dass das erste Abstützlager sowie auch das zweite Abstützlager in axialer Richtung zwischen den Betätigungsvorrichtungen auf einer ersten axialen Seite und dem Element des Gehäuses auf einer zweiten axialen Seite der Kupplungsvorrichtung angeordnet sind.

Gemäß einer weiteren vorteilhaften Ausführungsform ist der Lamellenträger der ersten Kupplung ein Außenlamellenträger und der Lamellenträger der zweiten Kupplung ist gleichzeitig ein Innenlamellenträger der ersten Kupplung.

Der Lamellenträger der zweiten Kupplung ist dabei hinsichtlich der zweiten Kupplung als Außenlamellenträger ausgebildet und hat somit eine Doppelfunktion.

Ein Innenlamellenträger der zweiten Kupplung bildet eine Ausgangsseite der zweiten Kupplung. Die Ausgangsseite der ersten Kupplung wird durch den Innenlamellenträger der ersten Kupplung gebildet.

Die beiden Ausgangsseiten der Kupplungen sind dazu eingerichtet, mit koaxial zueinander verlaufenden Wellen drehfest verbunden zu werden, zum Beispiel über entsprechende Profilverzahnungen.

Die erfindungsgemäße Kupplungsvorrichtung weist den Vorteil auf, dass bei einfacher Montage eine hohe Zuverlässigkeit und lange Lebensdauer mit einem geringen Bauraumbedarf gewährleistet werden.

Dadurch, dass die axiale Abstützung der ersten Betätigungskraft und der zweiten Betätigungskraft lediglich durch das erste Abstützlager und das zweite Abstützlager realisiert ist, müssen zur Abstützung der Betätigungskräfte keine zusätzlichen Lager angeordnet werden. Diese Einsparung an Bauteilen macht die Montage der Kupplungsvorrichtung einfacher und kostengünstiger.

Zudem ist ebenfalls durch die Ausführung des zweiten Abstützlagers als ein Axiallager sowie dessen Position axial zwischen dem Lamellenträger der zweiten Kupplung und dem Lamellenträger der ersten Kupplung und durch die Abstützung des Radiallagers am Element des Gehäuses durch ein Federelement eine einfache Montage gewährleistet.

Die schrägen Wirklinien des ersten Abstützlagers und des Radiallagers realisieren dabei zusammen eine O- oder X-Anordnung, welche gewährleistet, dass keine unerwünschte Verkippung des Kupplungseingangs und damit auch der Kupplungen stattfindet, so dass eine zuverlässige Funktion und eine lange Lebensdauer gegeben sind.

Des Weiteren wird erfindungsgemäß ein Hybridmodul für ein Kraftfahrzeug zum Ankoppeln einer Verbrennungskraftmaschine sowie eines Getriebes zur Verfügung gestellt, das eine erfindungsgemäße Kupplungsvorrichtung sowie eine elektrische Maschine mit einem Rotor aufweist, wobei der Rotor mit dem Kupplungseingang der Kupplungsvorrichtung drehfest verbunden ist. Dabei ist der mit der Abtriebswelle axial fest mechanisch verbundene Lamellenträger der ersten Kupplung ein Rotorträger zur Drehlagerung des Rotors.

Das bedeutet, dass der Rotor über den Rotorträger, der gleichzeitig ein Lamellenträger, insbesondere ein Außenlamellenträger, der ersten Kupplung ist, mit dem Kupplungseingang der Kupplungsvorrichtung drehfest verbunden ist.

Die erste Kupplung kann einen ersten Kupplungsausgang sowie erste Kupplungslamellen umfassen, die eine schaltbare Drehmomentübertragung zwischen dem ersten Kupplungseingang und einem ersten Kupplungsausgang bewirken.

Die zweite Kupplung kann einen zweiten Kupplungseingang und einen zweiten Kupplungsausgang sowie zweite Kupplungslamellen umfassen, die eine schaltbare Drehmomentübertragung zwischen dem zweiten Kupplungseingang und dem zweiten Kupplungsausgang bewirken.

Der erste Kupplungsausgang kann mit einem Abtriebselement verbunden sein. Der zweite Kupplungsausgang kann mit dem Abtriebselement verbunden sein. Das Abtriebselement kann ein Getriebe sein, insbesondere ein DHT-Getriebe (Dedicated Hybrid Transmission). Der erste und zweite Kupplungsausgang können einteilig ausgeführt sein.

Der erste Kupplungsausgang kann mit einer ersten Getriebeeingangswelle eines Getriebes verbunden sein und der zweite Kupplungsausgang kann mit einer zweiten Getriebeeingangswelle des Getriebes verbunden sein.

Die erste Kupplung kann eine K0-Kupplung sein. Die zweite Kupplung kann eine K1-Kupplung sein. Die erste Kupplung und zweite Kupplung können gleichzeitig betätigt werden.

Dabei ist die Antriebswelle der Kupplungsvorrichtung zur mechanischen Kopplung mit der Verbrennungskraftmaschine vorgesehen.

Lamellenträger der beiden Kupplungen der Kupplungseinrichtung sind dazu eingerichtet, jeweils drehfest mit einer der Wellen verbunden zu werden, die die mechanische Verbindung mit dem Getriebe herstellen.

Die Kupplungen der Kupplungseinrichtung sind dabei bevorzugt innerhalb eines vom Rotorträger radial außen begrenzten Raums angeordnet. Insbesondere können die Kupplungen in einer solchen Ausgestaltung ineinander verschachtelt sein, wobei die zweite Kupplung bezüglich der ersten Kupplung radial innen angeordnet ist.

Eine axiale Erstreckung der ersten Kupplung und eine axiale Erstreckung der zweiten Kupplung können sich entsprechend axial überlappen.

Das Gehäuse kann ein Kupplungsgehäuse, ein Getriebegehäuse oder ein Hybridmodulgehäuse sein. Zwischen dem Gehäuse und der Antriebswelle kann ein Drehdichtring, beispielsweise ein Radialwellendichtring, angeordnet sein.

Weiterhin wird erfindungsgemäß eine Antriebsanordnung für ein Kraftfahrzeug zur Verfügung gestellt, die ein erfindungsgemäßes Hybridmodul, ein Antriebsaggregat, insbesondere eine Verbrennungskraftmaschine, sowie ein Getriebe aufweist, wobei das Hybridmodul mit dem Antriebsaggregat über die Antriebswelle der Kupplungsvorrichtung und mit dem Getriebe über Lamellenträger der Kupplungsvorrichtung mechanisch verbunden ist.

Das angeschlossene Getriebe kann insbesondere ein Planetengetriebe sein, welches mit den Ausgangsseiten der Kupplungen über jeweils eine Welle gekoppelt ist. Die erfindungsgemäße Kupplungsvorrichtung ermöglicht es, Planeten- und Sonnenräder des Planetengetriebes über entsprechende mit den Kupplungen gekoppelte Wellen anzutreiben.

Die Verbrennungskraftmaschine fungiert dabei als eine erste Antriebseinheit, wobei die elektrische Maschine als eine zweite Antriebseinheit fungiert.

Die Kupplungsvorrichtung kann in einem Hybridantriebsstrang des Hybridmoduls eingesetzt sein, wobei die zweite Antriebseinheit Bestandteil einer P1-Hybrid-Anordnung sein kann.

Die oben beschriebene Erfindung wird nachfolgend vor dem betreffenden technischen Hintergrund unter Bezugnahme auf die zugehörige Zeichnung, welche eine bevorzugte Ausgestaltung zeigt, detailliert erläutert. Die Erfindung wird durch die rein schematische Zeichnung in keiner Weise beschränkt, wobei anzumerken ist, dass das in der Zeichnung gezeigte Ausführungsbeispiel nicht auf die dargestellten Maße eingeschränkt sind. Es ist dargestellt in

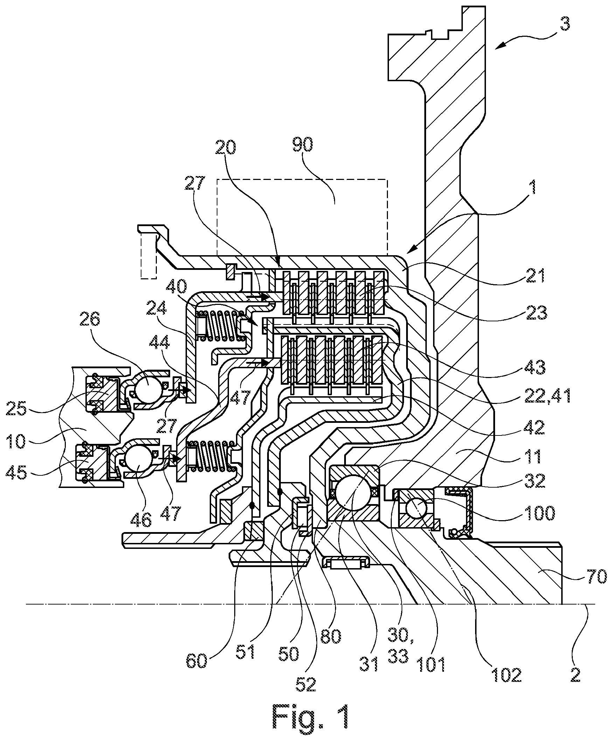

Fig. 1: ein Hybridmodul mit einer erfindungsgemäßen Kupplungsvorrichtung.

Diese Kupplungsvorrichtung 1 umfasst auf einer gemeinsamen Rotationsachse 2 in einem, hier nur bereichsweise angedeutetem Gehäuse 10 eine erste Kupplung 20 sowie eine zweite Kupplung 40.

Des Weiteren umfasst die Kupplungsvorrichtung 1 eine Antriebswelle 70, die zur mechanischen Kopplung an ein externes Antriebsaggregat, wie zum Beispiel eine Verbrennungskraftmaschine, ausgebildet ist.

Die Antriebswelle 70 ist mechanisch fest mit einem Außenlamellenträger 21 der ersten Kupplung 20 als Kupplungseingang 80 verbunden.

An diesem Außenlamellenträger 21 sind Lamellen des Lamellenpakets 23 der ersten Kupplung 20 angeschlossen. Das Lamellenpaket 23 umfasst des Weiteren Lamellen an einem Innenlamellenträger 22 der ersten Kupplung 20.

Der Innenlamellenträger 22 der ersten Kupplung 20 ist dabei gleichzeitig der Außenlamellenträger 41 der zweiten Kupplung 40. In diesem Außenlamellenträger 41 ist das Lamellenpaket 43 der zweiten Kupplung 40 angeordnet. Auf der radialen Innenseite des Lamellenpakets 43 ist dieses an einem Innenlamellenträger 42 der ersten Kupplung 40 angeschlossen. Die zweite Kupplung 40 ist somit mit ihrem Lamellenpaket 43 radial innerhalb der ersten Kupplung 20 bzw. deren Lamellenpaket 23 angeordnet.

Der Innenlamellenträger 22 der ersten Kupplung 20 kann mit einer hier nicht dargestellten ersten Getriebeeingangswelle gekoppelt sein. Der Innenlamellenträger 42 der zweiten Kupplung 40 kann mit einer ebenfalls nicht dargestellten zweiten Getriebeeingangswelle gekoppelt sein. Die Getriebeeingangswellen sind zum Anschluss einer hier nicht dargestellten Getriebeeinheit, insbesondere eines Planetengetriebes, vorgesehen und ausgestaltet.

Ein am Kupplungseingang 80 bzw. an der Antriebswelle 70 anliegendes Drehmoment kann somit über die erste Kupplung 20 bei deren Schließung auf die erste Getriebeeingangswelle und auf die zweite Kupplung 40 geleitet werden, und bei Schließung der zweiten Kupplung 40 auf die zweite Getriebeeingangswelle geleitet werden.

Es ist ersichtlich, dass die in Figur 1 dargestellte Kupplungsvorrichtung 1 Bestandteil eines Hybridmoduls 3 ist. Dieses Hybridmodul 3 umfasst neben der Kupplungsvorrichtung 1 des Weiteren eine elektrische Maschine, von der in Figur 1 lediglich der Rotor 90 dargestellt ist.

Der Rotor 90 ist drehfest mit dem Außenlamellenträger 21 der ersten Kupplung 20 auf dessen radialer Außenseite verbunden, wobei der Außenlamellenträger 21 somit gleichzeitig den Rotorträger ausbildet. Dabei sind die erste und zweite Kupplung 20, 40 in einem vom Rotor 90 radial umgebenen Raum angeordnet.

Zur Betätigung der ersten Kupplung 20 ist eine erste Betätigungsvorrichtung 25 vorgesehen, welche sich am Gehäuse 10 axial abstützt. Diese erste Betätigungsvorrichtung 25 ist dazu eingerichtet, eine erste Betätigungskraft 27 auf ein erstes Betätigungslager 26 zu leiten, von dem die erste Betätigungskraft 27 über einen ersten Drucktopf 24 auf das Lamellenpaket 23 der ersten Kupplung 20 übertragen wird.

Zur Betätigung der zweiten Kupplung 40 ist eine zweite Betätigungsvorrichtung 45 vorgesehen, welche sich an dem Gehäuse 10 axial abstützt. Diese zweite Betätigungsvorrichtung 45 ist dazu eingerichtet, eine zweite Betätigungskraft 47 auf ein zweites Betätigungslager 46 zu leiten, von dem die zweite Betätigungskraft 47 über einen zweiten Drucktopf 44 auf das Lamellenpaket 43 der zweiten Kupplung 40 übertragen wird.

Die erste Betätigungsvorrichtung 25 umfasst einen in einem ersten Betätigungsgehäuse verschiebbaren ersten Betätigungskolben zur Bewirkung der ersten Betätigungskraft 27 auf den ersten Drucktopf 24. Die zweite Betätigungsvorrichtung 45 umfasst einen in einem zweiten Betätigungsgehäuse verschiebbaren zweiten Betätigungskolben zur Bewirkung der zweiten Betätigungskraft 47 auf den zweiten Drucktopf 44.

Das erste Betätigungsgehäuse wie auch das zweite Betätigungsgehäuse sind dabei vom Gehäuse 10 der Kupplungsvorrichtung 1 ausgebildet.

Die auf den Außenlamellenträger 21 der ersten Kupplung 20 wirkende erste Betätigungskraft 27 wird von diesem auf ein erstes Abstützlager 30, ausgestaltet als Schrägkugellager, geführt.

Dabei liegt das erste Abstützlager 30 mit seinem Innenring am Außenlamellenträger 21 der ersten Kupplung 20 an und mit seinem Außenring an einem Element 11 des Gehäuses 10 an, so dass die erste Betätigungskraft 27 sich über das erste Abstützlager 30 axial am Element 11 des Gehäuses 10 abstützt.

Die zweite Betätigungskraft 47 wird auf den Außenlamellenträger 41 der zweiten Kupplung 40, der gleichzeitig der Innenlamellenträger 22 der ersten Kupplung 20 ist, geleitet und von diesem auf ein zweites Abstützlager 50 geführt. Das zweite Abstützlager 50 ist als ein Axiallager ausgeführt und liegt mit seiner ersten axialen Seite 51 am Außenlamellenträger 41 der zweiten Kupplung 40 an und mit seiner zweiten axialen Seite 52 am Außenlamellenträger 21 der ersten Kupplung 20 an. Die axial von der zweiten Kupplung 40 auf den Außenlamellenträger 21 der ersten Kupplung 20 aufgebrachte zweite Betätigungskraft 47 stützt sich somit über den Außenlamellenträger 21 der ersten Kupplung 20 und ebenfalls über das erste Abstützlager 30 am Element 11 des Gehäuses 10 ab.

Das Element 11 des Gehäuses 10 realisiert somit über das erste Abstützlager 30, den Kupplungseingang 80 und den Außenlamellenträger 41 der zweiten Kupplung 40 eine Gegenkraft zur zweiten Betätigungskraft 47 auf die zweite Kupplung 20 zwecks Erzeugung des notwendigen statischen Gleichgewichts bei der Betätigung der zweiten Kupplung 20.

Weiterhin ist axial zwischen dem Außenlamellenträger 41 der zweiten Kupplung 40 und dem Innenlamellenträger 42 der zweiten Kupplung 40 ein Axiallager 60 angeordnet ist. Dieses Axiallager 60 dient der Positionierung der beiden Lamellenträger 41, 42 der zweiten Kupplung 40 in axialer Richtung zueinander.

Das Element 11 des Gehäuses 10 ist mit einem ebenfalls zum Gehäuse 10 gehörigen, hier nicht dargestellten Kupplungsdeckel zumindest in axialer Richtung fest verbunden, sodass die Abstützung aller Betätigungskräfte 27, 47 und dadurch bedingter Reaktionskräfte letztendlich durch das Gehäuse 10 realisiert wird.

Des Weiteren umfasst die dargestellte Kupplungsvorrichtung 1 bzw. das dargestellte Hybridmodul 3 ein Radiallager 100 zwischen der Antriebswelle 70 und dem Element 11 des Gehäuses 10. Das Radiallager 100 dient neben dem ersten Abstützlager 30 ebenfalls zur radialen Abstützung der Antriebswelle 70. Das Radiallager 100 ist am Element 11 des Gehäuses 10 dabei durch ein Federelement 101 axial abgestützt. Durch die Ausgestaltung des ersten Abstützlagers 30 als ein Schrägkugellager verläuft dessen Wirklinie 33 entsprechend schräg, wobei die Wirklinie 102 des Radiallagers 100 auf Grund der Abstützung durch das Federelement 101 ebenfalls schräg verläuft. Die beiden Wirklinien 33, 102 ergeben zusammen eine O-Anordnung, so dass keine unerwünschte Verkippung des Kupplungseingangs 80 und damit auch der Kupplungen 20, 40 stattfindet.

Mit der erfindungsgemäßen Kupplungsvorrichtung sowie einem damit ausgestatteten Hybridmodul und einer erfindungsgemäßen Antriebsanordnung lässt sich mit geringen Kosten eine einfache Montage gewährleisten.

### Bezugszeichenliste

- 1: Kupplungsvorrichtung
- 2: Rotationsachse
- 3: Hybridmodul

- 10: Gehäuse
- 11: Element des Gehäuses

- 20: erste Kupplung
- 21: Außenlamellenträger der ersten Kupplung
- 22: Innenlamellenträger der ersten Kupplung
- 23: Lamellenpaket der ersten Kupplung
- 24: erster Drucktopf
- 25: erste Betätigungsvorrichtung
- 26: erstes Betätigungslager
- 27: erste Betätigungskraft

- 30: erstes Abstützlager
- 31: Außenring des ersten Abstützlagers
- 32: Innenring des ersten Abstützlagers
- 33: Wirklinie des ersten Abstützlagers

- 40: zweite Kupplung
- 41: Außenlamellenträger der zweiten Kupplung
- 42: Innenlamellenträger der zweiten Kupplung
- 43: Lamellenpaket der zweiten Kupplung
- 44: zweiter Drucktopf
- 45: zweite Betätigungsvorrichtung
- 46: zweites Betätigungslager
- 47: zweite Betätigungskraft

- 50: zweites Abstützlager
- 51: erste axiale Seite des zweiten Abstützlagers
- 52: zweite axiale Seite des zweiten Abstützlagers

- 60: Axiallager

- 70: Antriebswelle

- 80: Kupplungseingang

- 90: Rotor

- 100: Radiallager
- 101: Federelement
- 102: Wirklinie des Radiallagers

## Patentansprüche

1. Kupplungsvorrichtung (1) in einem Antriebsstrang eines Fahrzeugs mit einem Gehäuse (10), einer ersten Kupplung (20) mit einem mit einer Antriebswelle (70) verbundenen oder von der Antriebswelle (70) ausgebildeten Kupplungseingang (80), und einer zweiten Kupplung (40), wobei der ersten Kupplung (20) eine erste Betätigungsvorrichtung (25) zur Beaufschlagung der ersten Kupplung (20) mit einer ersten Betätigungskraft (27) zugeordnet ist, und der zweiten Kupplung (40) eine zweite Betätigungsvorrichtung (45) zur Beaufschlagung der zweiten Kupplung (40) mit einer zweiten Betätigungskraft (47) zugeordnet ist, wobei die Kupplungsvorrichtung (1) zur Abstützung der ersten Betätigungskraft (27) ein erstes Abstützlager (30) umfasst und zur Abstützung der zweiten Betätigungskraft (47) ein zweites Abstützlager (50) umfasst, wobei sich das erste Abstützlager (30) an einem Element (11) des Gehäuses (10) axial abstützt, und das zweite Abstützlager (50) in axialer Richtung zwischen einem Lamellenträger (41) der zweiten Kupplung (40) sowie dem Kupplungseingang (80) angeordnet ist, so dass eine in der zweiten Kupplung (40) auf den Lamellenträger (41) der zweiten Kupplung (40) axial übertragene zweite Betätigungskraft (47) von dem Lamellenträger (41) der zweiten Kupplung (40) über das zweite Abstützlager (51) auf den Kupplungseingang (80) übertragbar ist und dort mittels dem ersten Abstützlager am Element (11) des Gehäuses (10) abstützbar ist, **dadurch gekennzeichnet, dass** zur axialen Abstützung der ersten Betätigungskraft (27) und der zweiten Betätigungskraft (47) lediglich das erste Abstützlager (30) und das zweite Abstützlager (50) dienen..

2. Kupplungsvorrichtung (1) nach Anspruch 1,
**dadurch gekennzeichnet, dass** der Kupplungseingang (80) durch einen Lamellenträger (21), insbesondere einen Außenlamellenträger (21), der ersten Kupplung (20) ausgebildet ist, der axial fest mit der Antriebswelle (70) mechanisch verbunden ist, wobei das erste Abstützlager (30) axial am Lamellenträger (21) der ersten Kupplung (20) anliegt.

3. Kupplungsvorrichtung (1) nach einem der vorhergehenden Ansprüche,
**dadurch gekennzeichnet, dass** das zweite Abstützlager (50) ein Axiallager ist.

4. Kupplungsvorrichtung (1) nach einem der vorhergehenden Ansprüche,
**dadurch gekennzeichnet, dass** radial zwischen der Antriebswelle (70) und dem Element (11) des Gehäuses (10) ein Radiallager (100) angeordnet ist.

5. Kupplungsvorrichtung nach Anspruch 4,
**dadurch gekennzeichnet, dass** das erste Abstützlager (30) ein Schrägkugellager ist und das Radiallager (100) am Element (11) des Gehäuses (10) durch ein Federelement (101) axial abgestützt ist, sodass sich durch das erste Abstützlager (30) sowie das Radiallager (100) hinsichtlich der Wirklinien (33, 102) der durch das erste Abstützlager (30) und das Radiallager (100) realisierten Abstützungswirkungen eine O- oder X-Anordnung ergibt.

6. Kupplungsvorrichtung (1) nach einem der Ansprüche 1 bis 5,
**dadurch gekennzeichnet, dass** das erste Abstützlager (30) mit seiner radialen Außenseite am Element (11) des Gehäuses (10) anliegt, und mit seiner radialen Innenseite am Lamellenträger (21) der ersten Kupplung (20) anliegt.

7. Kupplungsvorrichtung (1) nach einem der Ansprüche 1 bis 6,
**dadurch gekennzeichnet, dass** der Lamellenträger (21) der ersten Kupplung (20) ein Außenlamellenträger (21) ist und der Lamellenträger (41) der zweiten Kupplung (40) gleichzeitig ein Innenlamellenträger (22) der ersten Kupplung (20) ist.

8. Hybridmodul (3) für ein Kraftfahrzeug zum Ankoppeln einer Verbrennungskraftmaschine sowie eines Getriebes, umfassend die Kupplungsvorrichtung (1) gemäß einem der Ansprüche 1 bis 7 sowie eine elektrische Maschine, die einen Rotor (90) umfasst, der mit dem Kupplungseingang (80) der Kupplungsvorrichtung (1) drehfest verbunden ist, wobei der mit der Antriebswelle (70) axial fest mechanisch verbundene Lamellenträger (21) der ersten Kupplung (20) ein Rotorträger zur Drehlagerung des Rotors (90) ist.

9. Antriebsanordnung für ein Kraftfahrzeug, umfassend ein Hybridmodul (3) gemäß Anspruch 8 sowie ein Antriebsaggregat, insbesondere eine Verbrennungskraftmaschine, sowie ein Getriebe, wobei das Hybridmodul (3) mit dem Antriebsaggregat über die Antriebswelle (70) der Kupplungsvorrichtung (1) und mit dem Getriebe über Lamellenträger (21, 41) der Kupplungsvorrichtung (1) mechanisch verbunden ist.

## Claims

1. A clutch device (1) in a drive train of a vehicle having a housing (10), a first clutch (20) with a clutch input (80) connected to a drive shaft (70) or formed by the drive shaft (70), and a second clutch (40), wherein the first clutch (20) is assigned a first actuating device (25) for applying a first actuating force (27) to the first clutch (20), and the second clutch (40) is assigned a second actuating device (45) for applying a second actuating force (47) to the second clutch (40), wherein the clutch device (1) comprises a first support bearing (30) for supporting the first actuation force (27) and a second support bearing (50) for supporting the second actuation force (47), wherein the first support bearing (30) is axially supported on an element (11) of the housing (10), and the second support bearing (50) is arranged in the axial direction between a disc carrier (41) of the second clutch (40) and the clutch input (80), such that a second actuating force (47) transmitted axially into the second clutch (40) to the disc carrier (41) of the second clutch (40) can be transmitted from the disc carrier (41) of the second clutch (40) via the second support bearing (51) to the clutch input (80) and can be supported there by means of the first support bearing on the element (11) of the housing (10), **characterized in that** the first support bearing (30) and the second support bearing (50) are only used for axial support of the first actuating force (27) and the second actuating force (47).

2. The clutch device (1) according to claim 1,
**characterized in that** the clutch input (80) is formed by a disc carrier (21), in particular an outer disc carrier (21), of the first clutch (20), which is axially firmly mechanically connected to the drive shaft (70), wherein the first support bearing (30) rests axially on the disc carrier (21) of the first clutch (20).

3. The clutch device (1) according to one of the preceding claims, **characterized in that** the second support bearing (50) is an axial bearing.

4. The clutch device (1) according to one of the preceding claims, **characterized in that** a radial bearing (100) is arranged radially between the drive shaft (70) and the element (11) of the housing (10).

5. The clutch device according to claim 4,
**characterized in that** the first support bearing (30) is an angular contact ball bearing and the radial bearing (100) is axially supported on the element (11) of the housing (10) by a spring element (101), such that the first support bearing (30) and the radial bearing (100) result in an O or X arrangement with respect to the lines of action (33, 102) of the support effects realized by the first support bearing (30) and the radial bearing (100).

6. The clutch device (1) according to one of claims 1 to 5,
**characterized in that** the first support bearing (30) rests with its radial outer side on the element (11) of the housing (10), and with its radial inner side rests on the disc carrier (21) of the first clutch (20).

7. The clutch device (1) according to one of claims 1 to 6,
**characterized in that** the disc carrier (21) of the first clutch (20) is an outer disc carrier (21) and the disc carrier (41) of the second clutch (40) is at the same time an inner disc carrier (22) of the first clutch (20).

8. A hybrid module (3) for a motor vehicle for coupling an internal combustion engine and a transmission, comprising the clutch device (1) according to one of claims 1 to 7 and an electric machine which comprises a rotor (90) which is non-rotatably connected to the clutch input (80) of the clutch device (1), wherein the disc carrier (21) of the first clutch (20), which is axially fixedly mechanically connected to the drive shaft (70), is a rotor carrier for the rotational mounting of the rotor (90).

9. A drive arrangement for a motor vehicle, comprising a hybrid module (3) according to claim 8 and a drive unit, in particular an internal combustion engine, and a transmission, wherein the hybrid module (3) is mechanically connected to the drive unit via the drive shaft (70) of the clutch device (1) and to the transmission via disc carriers (21, 41) of the clutch device (1).

## Revendications

1. Système d'embrayage (1) dans une chaîne cinématique d'un véhicule comportant un boîtier (10), un premier embrayage (20) avec une entrée d'embrayage (80) reliée à un arbre d'entraînement (70) ou formée par l'arbre d'entraînement (70), et un second embrayage (40), le premier embrayage (20) étant associé à un premier dispositif d'actionnement (25) pour appliquer une première force d'actionnement (27) au premier embrayage (20), et le second embrayage (40) étant associé à un second dispositif d'actionnement (45) pour appliquer une seconde force d'actionnement (47) au second embrayage (40), le système d'embrayage (1) comprenant un premier roulement de support (30) pour supporter la première force d' actionnement (27) et un second roulement de support (50) pour supporter la seconde force d'actionnement (47), le premier roulement de support (30) étant supporté axialement sur un élément (11) du boîtier (10), et le second roulement de support (50) étant agencé dans la direction axiale entre un porte-disque (41) du second embrayage (40) et l'entrée d'embrayage (80), de telle sorte qu'une seconde force d'actionnement (47) transmise axialement dans le second embrayage (40) au porte-disque (41) du second embrayage (40) peut être transmise du porte-disque (41) du second embrayage (40) par l'intermédiaire du second roulement de support (51) à l'entrée d'embrayage (80) et peut être supportée à cet endroit au moyen du premier roulement de support sur l'élément (11) du boîtier (10), **caractérisé en ce que** seuls le premier roulement de support (30) et le second roulement de support (50) servent au support axial de la première force d'actionnement (27) et de la seconde force d'actionnement (47).

2. Système d'embrayage (1) selon la revendication 1,
**caractérisé en ce que** l'entrée d'embrayage (80) est formée par un porte-disque (21), en particulier un porte-disque extérieur (21), du premier embrayage (20), qui est relié mécaniquement de manière fixe axialement à l'arbre d'entraînement (70), le premier roulement de support (30) reposant axialement sur le porte-disque (21) du premier embrayage (20).

3. Système d'embrayage (1) selon l'une quelconque des revendications précédentes, **caractérisé en ce que** le second roulement de support (50) est un roulement axial.

4. Système d'embrayage (1) selon l'une quelconque des revendications précédentes, **caractérisé en ce qu'**un roulement radial (100) est agencé radialement entre l'arbre d'entraînement (70) et l'élément (11) du boîtier (10).

5. Système d'embrayage selon la revendication 4,
**caractérisé en ce que** le premier roulement de support (30) est un roulement à billes à contact oblique et le roulement radial (100) est supporté axialement sur l'élément (11) du boîtier (10) par un élément ressort (101), de telle sorte que le premier roulement de support (30) et le roulement radial (100) entraînent un agencement en O ou en X par rapport aux lignes d'action (33, 102) des effets de support réalisés par le premier roulement de support (30) et le roulement radial (100).

6. Système d'embrayage (1) selon l'une quelconque des revendications 1 à 5,
**caractérisé en ce que** le premier roulement d'appui (30) repose avec son côté extérieur radial sur l'élément (11) du boîtier (10), et avec son côté intérieur radial repose sur le porte-disque (21) du premier embrayage (20).

7. Système d'embrayage (1) selon l'une quelconque des revendications 1 à 6,
**caractérisé en ce que** le porte-disque (21) du premier embrayage (20) est un porte-disque extérieur (21) et le porte-disque (41) du second embrayage (40) est en même temps un porte-disque intérieur (22) du premier embrayage (20).

8. Module hybride (3) pour un véhicule à moteur permettant d'accoupler un moteur à combustion interne et une boîte de vitesses, comprenant le système d' embrayage (1) selon l'une quelconque des revendications 1 à 7 et une machine électrique qui comprend un rotor (90) qui est relié à l'entrée d'embrayage (80) du système d'embrayage (1) de manière fixe en rotation, le porte-disque (21) du premier embrayage (20), qui est relié mécaniquement de manière fixe axialement à l'arbre d'entraînement (70), étant un support de rotor pour le montage rotatif du rotor (90).

9. Système d'entraînement pour un véhicule à moteur, comprenant un module hybride (3) selon la revendication 8 et un groupe d'entraînement, en particulier un moteur à combustion interne, ainsi qu'une boîte de vitesses, le module hybride (3) étant relié mécaniquement au groupe d'entraînement par l'intermédiaire de l'arbre d'entraînement (70) du système d'embrayage (1) et à la boîte de vitesses par l'intermédiaire de porte-disques (21, 41) du système d'embrayage (1).
